# EUROPEAN PATENT SPECIFICATION

(11) **EP 3 298 048 B1**
(45) Date of publication and mention of the grant of the patent: **03.07.2019**
(21) Application number: 16725438.2
(22) Date of filing: 18.05.2016
(51) Int. Cl.: C08F 4/651, C08F 10/00

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMÉRISATION D'OLÉFINES

(30) Priority: 19.05.2015 EP 15168208
(43) Date of publication of application: 28.03.2018
(73) Proprietor: Basell Poliolefine Italia S.r.l., 20121 Milano (IT)
(72) Inventor: MIGNOGNA, Alessandro, 44122 Ferrara (IT); KASHULIN, Igor, Moscow 119607 (RU); MORINI, Giampiero, 44122 Ferrara (IT); NIFANT'EV, Ilya, Moscow 119526 (RU)
(74) Representative: Giberti, Stefano
(86) International application number: PCT/EP2016/061078
(87) International publication number: WO 2016/184884

(56) References cited:
- WO-A1-2014/001257
- WO-A1-2015/032939

## Description

### FIELD OF THE INVENTION

The present disclosure relates to catalyst components for the polymerization of olefins, in particular propylene, comprising a Mg dihalide based support on which are supported Ti atoms and an electron donor compound containing an ester and a carbamate function. The present disclosure further relates to the catalysts obtained from said components and to their use in processes for the polymerization of olefins in particular propylene.

### BACKGROUND OF THE INVENTION

Catalyst components for the stereospecific polymerization of olefins have been disclosed in the art. Concerning the polymerization of propylene, Ziegler-Natta catalysts are used which, in general terms, comprise a solid catalyst component, constituted by a magnesium dihalide on which are supported a titanium compound and an internal electron donor compound, used in combination with an Al-alkyl compound. Conventionally however, when a higher crystallinity of the polymer is desired, also an external donor (for example an alkoxysilane) is needed in order to obtain higher isotacticity. Esters of phthalic acid, particularly diisobutylphthalate, are used as internal donors in catalyst preparations. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised some concerns which caused some compounds within this class to be classified as source of heavy health problems.

Consequently, research activities have been devoted to discover alternative classes of internal donors for use in the preparation of catalyst components for propylene polymerization.

Some of the tested catalysts contain donors structures having contemporaneously amido groups and ester groups. WO2011/106494 describes substituted amide ester deriving from aliphatic 1,3-amino alcohol. The catalysts generated by these structures have not entirely satisfactory performances.

### SUMMARY OF THE INVENTION

Surprisingly, the applicant has found that a class of donors containing both a carbamate and ester function within a specific structure deriving from amino alcohol generates catalysts showing a good balance of activity and stereospecificity.

Accordingly, it is an object of the present disclosure a catalyst component for the polymerization of olefins comprising Mg, Ti and an electron donor of formula (I) 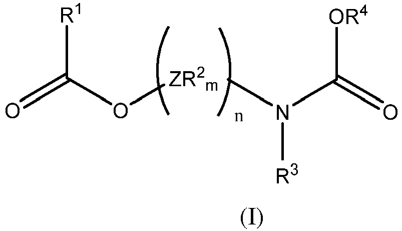 where independently, Z is selected from C, Si, Ge, O, N, S or P with the proviso that the atoms O, S, and N are not directly linked to either the ester oxygen or the carbamic nitrogen of the formula (I), the R² groups, equal to or different from each other, are hydrogen or a C₁-C₂₀ hydrocarbon radicals, optionally containing a heteroatom selected from halogen, P, S, N, O and Si, which can be fused together to form one or more cycles, m is a number satisfying the valences of Z and n is an integer ranging from 1 to 10, R¹ and R⁴ are selected from C₁-C₁₅ hydrocarbon groups, optionally containing a heteroatom selected from halogen, P, S, N, O; and R³ group is hydrogen or R⁴ groups.

### DETAILED DESCRIPTION OF THE INVENTION

Preferably, Z is selected from C and Si. In a more preferred embodiment, Z is carbon. Preferably, only C and Si can be linked directly to the ester oxygen and/or the carbamic nitrogen of formula (I).

In a particular embodiment, the (ZR²ₘ)ₙ group of formula (I) can be selected from the group consisting of aliphatic, alicyclic and aromatic bivalent radicals, optionally substituted with C₁-C₁₅ hydrocarbon groups and/or with heteroatoms selected from halogen, P, S, N, O and Si, in which n ranges from 1 to 6 atoms and especially from 1 to 4.

In a particularly preferred embodiment, the (ZR²ₘ)ₙ group is an aliphatic or alicyclic bridging group in which n ranges from 1-6 carbon atoms. Examples of bridging groups are methyliden, ethane-1,2-diyl, butane-2,3-diyl, pentane-2,4-diyl, 2,2-diisobutylpropane-1,3-diyl, cyclohexane-1,2-diyl, cyclopentane -1,2-diyl. The bridging group pentane-2,4-diyl being the most preferred.

Another class of preferred bridging group is the one based on cyclic aromatic groups which through the carbon ring atoms can link the two oxygen of formula (I). Among them, particularly preferred are the phenyl groups, optionally substituted with halogens or C₁-C₂₀ alkyl radicals, bridging the oxygen atoms in position 1,2 or 1,3 or 1,4 and the naphthalene groups, optionally substituted bridging the oxygen groups in position 1,2 or 2,3 or 1,8.

Particularly preferred internal donor structures are those of formula (II) below

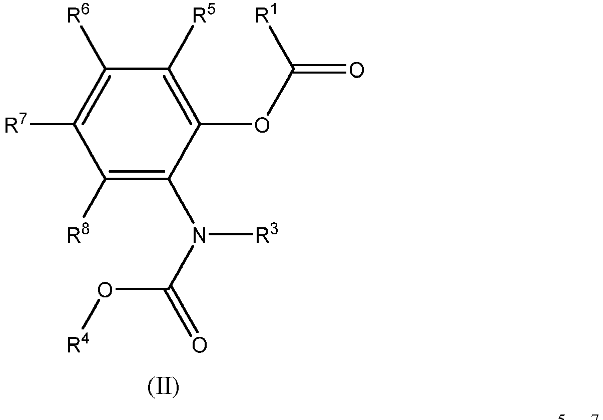

Preferred structures of formula (II) are those in which at least two of the R⁵-R⁷ groups are different from hydrogen. More preferably, the aromatic ring of formula (II) is substituted in position 3,5 and/or 6. In all these cases, R⁵-R⁸ groups are preferably selected from C₁-C₅ alkyl groups. Particularly preferred is the substitution in position 3 and/or 6 with a primary alkyl group especially methyl, and in position 4 and/or 5 with a tertiary alkyl group especially tert-butyl.

Specific examples of aromatic bridging groups are 1,2-phenylene, 3-methyl-1,2-phenylene, 4-chloro-1,2-phenylene, 4-(*tert*-butyl)-1,2-phenylene, 3,6-dimethyl-1,2-phenylene, 3,5-dimethyl-1,2-phenylene, 5-(*tert*-butyl)-3-methyl-1,2-phenylene, 3,5-diisopropyl-1,2-phenylene. 5-(*tert*-butyl)-3-methyl-1,2-phenylene is the most preferred.

Preferably, in the formulae (I) and (II) the R¹ groups are independently selected from C₁-C₁₅ alkyl groups, C₆-C₁₄ aryl groups, C₃-C₁₅ cycloalkyl groups, and C₇-C₁₅ arylalkyl or alkylaryl groups; the same applies to R² groups in formula (I) which can additionally be hydrogen. More preferably, the R¹ groups aryl or alkylaryl groups in particular phenyl groups preferably substituted with halogen and/or C₁-C₅ alkyl groups.

Preferably the R³ group is independently selected from hydrogen or C₁-C₁₀ alkyl groups and even more preferably from hydrogen or C₁-C₅ alkyl groups in particular methyl.

The R⁴ group is preferably selected from C₁-C₁₀ alkyl groups and even more preferably from C₁-C₅ alkyl groups in particular ethyl.

Particularly preferred are the structures of formula (III) below 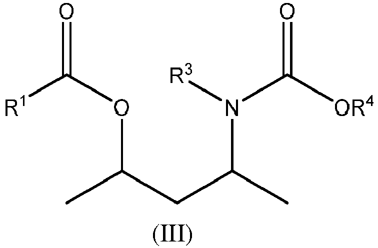 in which R¹ groups are phenyl groups optionally substituted with halogen and/or C₁-C₅ alkyl groups, R³ is hydrogen or C₁-C₂₀ hydrocarbon group, and R⁴ is a C₁-C₁₀ alkyl group. Preferably, R³ is hydrogen or methyl and R⁴ is a C₁-C₅ alkyl group. These structures may exist in different configurations that may imply the presence of mixture of stereoisomers in variable proportions although the syn form may often be preponderant. In particular, the ratio syn/anti may range from 2:1 to 10:1. As a specific example, we report that for certain structures of formula (III) the ratio syn/anti ranges from 7:1 to 10:1.

Preferably, the final amount of electron donor compound in the solid catalyst component ranges from 1 to 25% by weight preferably in the range from 3 to 20% by weight.

Examples of structures of formulas (I) are the following: 4-((butoxycarbonyl)(methyl)amino)pentan-2-yl 3-chlorobenzoate, 4-((butoxycarbonyl)(methyl)amino)pentan-2-yl 4-chlorobenzoate, 4-((ethoxycarbonyl)(ethyl)amino)pentan-2-yl 3-chlorobenzoate, 4-((ethoxycarbonyl)(ethyl)amino)pentan-2-yl 4-chlorobenzoate, 4-((ethoxycarbonyl)(ethyl)amino)pentan-2-yl 4-propylbenzoate, 4-((ethoxycarbonyl)(ethyl)amino)pentan-2-yl benzoate, 4-((ethoxycarbonyl)(methyl)amino)-3-methylpentan-2-yl 3-chlorobenzoate, 4-((ethoxycarbonyl)(methyl)amino)-3-methylpentan-2-yl 4-propylbenzoate, 4-((ethoxycarbonyl)(methyl)amino)-3-methylpentan-2-yl benzoate, 4-((ethoxycarbonyl)(methyl)amino)pentan-2-yl 3-chlorobenzoate, 4-((ethoxycarbonyl)(methyl)amino)pentan-2-yl 3-methylbutanoate, 4-((ethoxycarbonyl)(methyl)amino)pentan-2-yl 4-chlorobenzoate, 4-((ethoxycarbonyl)(methyl)amino)pentan-2-yl 4-propylbenzoate, 4-((ethoxycarbonyl)(methyl)amino)pentan-2-yl acetate, 4-((ethoxycarbonyl)(methyl)amino)pentan-2-yl benzoate, 4-((ethoxycarbonyl)(methyl)amino)pentan-2-yl pivalate, 4-((ethoxycarbonyl)amino)pentan-2-yl 3-chlorobenzoate, 4-((ethoxycarbonyl)amino)pentan-2-yl 4-chlorobenzoate, 4-((ethoxycarbonyl)amino)pentan-2-yl 4-propylbenzoate, 4-((ethoxycarbonyl)amino)pentan-2-yl benzoate, 4-((methoxycarbonyl)(methyl)amino)pentan-2-yl benzoate, 4-(benzyl(ethoxycarbonyl)amino)pentan-2-yl 3-chlorobenzoate, 4-(benzyl(ethoxycarbonyl)amino)pentan-2-yl 4-chlorobenzoate, 4-(benzyl(ethoxycarbonyl)amino)pentan-2-yl 4-propylbenzoate, 4-(benzyl(ethoxycarbonyl)amino)pentan-2-yl benzoate, 4-(methyl(propoxycarbonyl)amino)pentan-2-yl 4-propylbenzoate, (9-(((ethoxycarbonyl)(methyl)amino)methyl)-9H-fluoren-9-yl)methyl 3-chlorobenzoate, (9-(((ethoxycarbonyl)(methyl)amino)methyl)-9H-fluoren-9-yl)methyl 4-chlorobenzoate, (9-(((ethoxycarbonyl)(methyl)amino)methyl)-9H-fluoren-9-yl)methyl 4-propylbenzoate, (9-(((ethoxycarbonyl)(methyl)amino)methyl)-9H-fluoren-9-yl)methyl benzoate, 2-(((ethoxycarbonyl)(methyl)amino)methyl)-2-isobutyl-4-methylpentyl benzoate, 2-(((ethoxycarbonyl)(methyl)amino)methyl)-2-isopropyl-3-methylbutyl 4-propylbenzoate, 2-(((ethoxycarbonyl)(methyl)amino)methyl)-2-isopropyl-5-methylhexyl 3-chlorobenzoate, 2-(((ethoxycarbonyl)(methyl)amino)methyl)-2-isopropyl-5-methylhexyl 4-propylbenzoate, 2-(((ethoxycarbonyl)(methyl)amino)methyl)phenyl 4-chlorobenzoate, 2-(((ethoxycarbonyl)(methyl)amino)methyl)phenyl 4-propylbenzoate, 2-(((ethoxycarbonyl)(methyl)amino)methyl)phenyl benzoate, 2-(1-((ethoxycarbonyl)(methyl)amino)ethyl)phenyl 4-chlorobenzoate, 3-((ethoxycarbonyl)(methyl)amino)-2,2-dimethylpropyl 3-chlorobenzoate, 3-((ethoxycarbonyl)(methyl)amino)-2,2-dimethylpropyl 4-propylbenzoate, 3-((ethoxycarbonyl)(methyl)amino)-2,2-dimethylpropyl benzoate, 3-((ethoxycarbonyl)(methyl)amino)propyl 3-chlorobenzoate, 3-((ethoxycarbonyl)(methyl)amino)propyl 4-chlorobenzoate, 3-((ethoxycarbonyl)(methyl)amino)propyl 4-propylbenzoate, 3-((ethoxycarbonyl)(methyl)amino)propyl benzoate, 4-(tert-butyl)-2-(1-((ethoxycarbonyl)(methyl)amino)ethyl)-6-methylphenyl 4-propylbenzoate, 2-((ethoxycarbonyl)(methyl)amino)-1,2-diphenylethyl 4-propylbenzoate, 2-((ethoxycarbonyl)(methyl)amino)ethyl 4-propylbenzoate, 2-((ethoxycarbonyl)(methyl)amino)ethyl benzoate, 2-((ethoxycarbonyl)(methyl)amino)propyl 4-propylbenzoate, 3-(((ethoxycarbonyl)(methyl)amino)methyl)-2-isopropyl-4-methylpentyl 4-propylbenzoate, 3-((ethoxycarbonyl)(ethyl)amino)butan-2-yl 4-propylbenzoate, 4-((ethoxycarbonyl)(methyl)amino)-2,5-dimethylhexan-3-yl 4-propylbenzoate, 4-((ethoxycarbonyl)amino)-2,5-dimethylhexan-3-yl 4-propylbenzoate, 2-((ethoxycarbonyl)(ethyl)amino)phenyl 3-chlorobenzoate, 2-((ethoxycarbonyl)(ethyl)amino)phenyl 4-chlorobenzoate, 2-((ethoxycarbonyl)(ethyl)amino)phenyl 4-propylbenzoate, 2-((ethoxycarbonyl)(ethyl)amino)phenyl acetate, 2-((ethoxycarbonyl)(ethyl)amino)phenyl benzoate, 2-((ethoxycarbonyl)(ethyl)amino)phenyl pivalate, 2-((ethoxycarbonyl)(methyl)amino)phenyl 3-chlorobenzoate, 2-((ethoxycarbonyl)(methyl)amino)phenyl 4-chlorobenzoate, 2-((ethoxycarbonyl)(methyl)amino)phenyl 4-propylbenzoate, 2-((ethoxycarbonyl)(methyl)amino)phenyl acetate, 2-((ethoxycarbonyl)(methyl)amino)phenyl benzoate, 2-((ethoxycarbonyl)(methyl)amino)phenyl pivalate, 2-((ethoxycarbonyl)amino)phenyl 3-chlorobenzoate, 2-((ethoxycarbonyl)amino)phenyl 4-chlorobenzoate, 2-((ethoxycarbonyl)amino)phenyl 4-propylbenzoate, 2-((ethoxycarbonyl)amino)phenyl acetate, 2-((ethoxycarbonyl)amino)phenyl benzoate, 2-((ethoxycarbonyl)amino)phenyl pivalate, 2-((ethoxycarbonyl)(ethyl)amino)-6-methylphenyl 3-chlorobenzoate, 2-((ethoxycarbonyl)(ethyl)amino)-6-methylphenyl 4-chlorobenzoate, 2-((ethoxycarbonyl)(ethyl)amino)-6-methylphenyl 4-propylbenzoate, 2-((ethoxycarbonyl)(ethyl)amino)-6-methylphenyl acetate, 2-((ethoxycarbonyl)(ethyl)amino)-6-methylphenyl benzoate, 2-((ethoxycarbonyl)(ethyl)amino)-6-methylphenyl pivalate, 2-((ethoxycarbonyl)(methyl)amino)-6-methylphenyl 3-chlorobenzoate, 2-((ethoxycarbonyl)(methyl)amino)-6-methylphenyl 4-chlorobenzoate, 2-((ethoxycarbonyl)(methyl)amino)-6-methylphenyl 4-propylbenzoate, 2-((ethoxycarbonyl)(methyl)amino)-6-methylphenyl acetate, 2-((ethoxycarbonyl)(methyl)amino)-6-methylphenyl benzoate, 2-((ethoxycarbonyl)(methyl)amino)-6-methylphenyl pivalate, 2-((ethoxycarbonyl)amino)-6-methylphenyl 3-chlorobenzoate, 2-((ethoxycarbonyl)amino)-6-methylphenyl 4-chlorobenzoate, 2-((ethoxycarbonyl)amino)-6-methylphenyl 4-propylbenzoate, 2-((ethoxycarbonyl)amino)-6-methylphenyl acetate, 2-((ethoxycarbonyl)amino)-6-methylphenyl benzoate, 2-((ethoxycarbonyl)amino)-6-methylphenyl pivalate, 2-((ethoxycarbonyl)(ethyl)amino)-4,6-dimethylphenyl 3-chlorobenzoate, 2-((ethoxycarbonyl)(ethyl)amino)-4,6-dimethylphenyl 4-chlorobenzoate, 2-((ethoxycarbonyl)(ethyl)amino)-4,6-dimethylphenyl 4-propylbenzoate, 2-((ethoxycarbonyl)(ethyl)amino)-4,6-dimethylphenyl acetate, 2-((ethoxycarbonyl)(ethyl)amino)-4,6-dimethylphenyl benzoate, 2-((ethoxycarbonyl)(ethyl)amino)-4,6-dimethylphenyl pivalate, 2-((ethoxycarbonyl)(methyl)amino)-4,6-dimethylphenyl 3-chlorobenzoate, 2-((ethoxycarbonyl)(methyl)amino)-4,6-dimethylphenyl 4-chlorobenzoate, 2-((ethoxycarbonyl)(methyl)amino)-4,6-dimethylphenyl 4-propylbenzoate, 2-((ethoxycarbonyl)(methyl)amino)-4,6-dimethylphenyl acetate, 2-((ethoxycarbonyl)(methyl)amino)-4,6-dimethylphenyl benzoate, 2-((ethoxycarbonyl)(methyl)amino)-4,6-dimethylphenyl pivalate, 2-((ethoxycarbonyl)amino)-4,6-dimethylphenyl 3-chlorobenzoate, 2-((ethoxycarbonyl)amino)-4,6-dimethylphenyl 4-chlorobenzoate, 2-((ethoxycarbonyl)amino)-4,6-dimethylphenyl 4-propylbenzoate, 2-((ethoxycarbonyl)amino)-4,6-dimethylphenyl acetate, 2-((ethoxycarbonyl)amino)-4,6-dimethylphenyl benzoate, 2-((ethoxycarbonyl)amino)-4,6-dimethylphenyl pivalate, 4-(tert-butyl)-2-((ethoxycarbonyl)(ethyl)amino)-6-methylphenyl 3-chlorobenzoate, 4-(tert-butyl)-2-((ethoxycarbonyl)(ethyl)amino)-6-methylphenyl 4-chlorobenzoate, 4-(tert-butyl)-2-((ethoxycarbonyl)(ethyl)amino)-6-methylphenyl 4-propylbenzoate, 4-(tert-butyl)-2-((ethoxycarbonyl)(ethyl)amino)-6-methylphenyl acetate, 4-(tert-butyl)-2-((ethoxycarbonyl)(ethyl)amino)-6-methylphenyl benzoate, 4-(tert-butyl)-2-((ethoxycarbonyl)(ethyl)amino)-6-methylphenyl pivalate, 4-(tert-butyl)-2-((ethoxycarbonyl)(methyl)amino)-6-methylphenyl 3-chlorobenzoate, 4-(tert-butyl)-2-((ethoxycarbonyl)(methyl)amino)-6-methylphenyl 4-chlorobenzoate, 4-(tert-butyl)-2-((ethoxycarbonyl)(methyl)amino)-6-methylphenyl 4-propylbenzoate, 4-(tert-butyl)-2-((ethoxycarbonyl)(methyl)amino)-6-methylphenyl acetate, 4-(tert-butyl)-2-((ethoxycarbonyl)(methyl)amino)-6-methylphenyl benzoate, 4-(tert-butyl)-2-((ethoxycarbonyl)(methyl)amino)-6-methylphenyl pivalate, 4-(tert-butyl)-2-((ethoxycarbonyl)amino)-6-methylphenyl 3-chlorobenzoate, 4-(tert-butyl)-2-((ethoxycarbonyl)amino)-6-methylphenyl 4-chlorobenzoate, 4-(tert-butyl)-2-((ethoxycarbonyl)amino)-6-methylphenyl 4-propylbenzoate, 4-(tert-butyl)-2-((ethoxycarbonyl)amino)-6-methylphenyl acetate, 4-(tert-butyl)-2-((ethoxycarbonyl)amino)-6-methylphenyl benzoate, 4-(tert-butyl)-2-((ethoxycarbonyl)amino)-6-methylphenyl pivalate, 2-(benzyl(ethoxycarbonyl)amino)-4-(tert-butyl)-6-methylphenyl 3-chlorobenzoate, 2-(benzyl(ethoxycarbonyl)amino)-4-(tert-butyl)-6-methylphenyl 4-chlorobenzoate, 2-(benzyl(ethoxycarbonyl)amino)-4-(tert-butyl)-6-methylphenyl 4-propylbenzoate, 2-(benzyl(ethoxycarbonyl)amino)-4-(tert-butyl)-6-methylphenyl benzoate, 4-(tert-butyl)-2-((ethoxycarbonyl)(isobutyl)amino)-6-methylphenyl 3-chlorobenzoate, 4-(tert-butyl)-2-((ethoxycarbonyl)(isobutyl)amino)-6-methylphenyl 4-chlorobenzoate, 4-(tert-butyl)-2-((ethoxycarbonyl)(isobutyl)amino)-6-methylphenyl 4-propylbenzoate, 4-(tert-butyl)-2-((ethoxycarbonyl)(isobutyl)amino)-6-methylphenyl benzoate, 4-(tert-butyl)-2-((ethoxycarbonyl)(phenyl)amino)-6-methylphenyl 3-chlorobenzoate, 4-(tert-butyl)-2-((ethoxycarbonyl)(phenyl)amino)-6-methylphenyl 4-chlorobenzoate, 4-(tert-butyl)-2-((ethoxycarbonyl)(phenyl)amino)-6-methylphenyl 4-propylbenzoate, 4-(tert-butyl)-2-((ethoxycarbonyl)(phenyl)amino)-6-methylphenyl benzoate, 4-(tert-butyl)-2-((ethoxycarbonyl)(ethyl)amino)phenyl 3-chlorobenzoate, 4-(tert-butyl)-2-((ethoxycarbonyl)(ethyl)amino)phenyl 4-chlorobenzoate, 4-(tert-butyl)-2-((ethoxycarbonyl)(ethyl)amino)phenyl 4-propylbenzoate, 4-(tert-butyl)-2-((ethoxycarbonyl)(ethyl)amino)phenyl acetate, 4-(tert-butyl)-2-((ethoxycarbonyl)(ethyl)amino)phenyl benzoate, 4-(tert-butyl)-2-((ethoxycarbonyl)(ethyl)amino)phenyl pivalate, 4-(tert-butyl)-2-((ethoxycarbonyl)(methyl)amino)phenyl 3-chlorobenzoate, 4-(tert-butyl)-2-((ethoxycarbonyl)(methyl)amino)phenyl 4-chlorobenzoate, 4-(tert-butyl)-2-((ethoxycarbonyl)(methyl)amino)phenyl 4-propylbenzoate, 4-(tert-butyl)-2-((ethoxycarbonyl)(methyl)amino)phenyl acetate, 4-(tert-butyl)-2-((ethoxycarbonyl)(methyl)amino)phenyl benzoate, 4-(tert-butyl)-2-((ethoxycarbonyl)(methyl)amino)phenyl pivalate, 4-(tert-butyl)-2-((ethoxycarbonyl)amino)phenyl 3-chlorobenzoate, 4-(tert-butyl)-2-((ethoxycarbonyl)amino)phenyl 4-chlorobenzoate, 4-(tert-butyl)-2-((ethoxycarbonyl)amino)phenyl 4-propylbenzoate, 4-(tert-butyl)-2-((ethoxycarbonyl)amino)phenyl acetate, 4-(tert-butyl)-2-((ethoxycarbonyl)amino)phenyl benzoate, 4-(tert-butyl)-2-((ethoxycarbonyl)amino)phenyl pivalate, 1-((ethoxycarbonyl)amino)naphthalen-2-yl benzoate, 2-((ethoxycarbonyl)(methyl)amino)naphthalen-1-yl 3-chlorobenzoate, 2-((ethoxycarbonyl)(methyl)amino)naphthalen-1-yl 4-chlorobenzoate, 2-((ethoxycarbonyl)(methyl)amino)naphthalen-1-yl 4-propylbenzoate, 2-((ethoxycarbonyl)(methyl)amino)naphthalen-1-yl benzoate, 2-((ethoxycarbonyl)amino)naphthalen-1-yl 3-chlorobenzoate, 2-((ethoxycarbonyl)amino)naphthalen-1-yl 4-chlorobenzoate, 2-((ethoxycarbonyl)amino)naphthalen-1-yl 4-propylbenzoate, 2-((ethoxycarbonyl)amino)naphthalen-1-yl benzoate, 3-((ethoxycarbonyl)(methyl)amino)naphthalen-2-yl 4-chlorobenzoate, 3-((ethoxycarbonyl)amino)naphthalen-2-yl 4-chlorobenzoate, 3-((ethoxycarbonyl)amino)naphthalen-2-yl benzoate, 8-((ethoxycarbonyl)(methyl)amino)naphthalen-1-yl 4-propylbenzoate, 8-((ethoxycarbonyl)amino)naphthalen-1-yl 4-chlorobenzoate, 8-((ethoxycarbonyl)amino)naphthalen-1-yl benzoate, 4-((ethoxycarbonyl)(propyl)amino)pentan-2-yl 4-methylbenzoate, 4-(butyl(ethoxycarbonyl)amino)pentan-2-yl benzoate, 4-(butyl(ethoxycarbonyl)amino)pentan-2-yl 4-methylbenzoate, 4-(butyl(ethoxycarbonyl)amino)pentan-2-yl 4-chlorobenzoate, 4-(butyl(ethoxycarbonyl)amino)pentan-2-yl 4-fluorobenzoate, 4-((ethoxycarbonyl)(4-fluorophenyl)amino)pentan-2-yl 4-propylbenzoate, 4-(butyl(ethoxycarbonyl)amino)pentan-2-yl 3-methylbutanoate.

The compounds falling in formula (I) and (II) can be generally prepared by reacting an aminoalcohol HO-A-NRH with a suitable chloroformate. Then the monocarbamate-monoalcohol is reacted with a suitable acyl chloride. Both steps are carried out in presence of a base.

In solid catalyst component of the disclosure the amount of Ti atoms is preferably higher than 2.5%wt more preferably higher than 3.0% with respect to the total weight of said catalyst component.

As explained above, the catalyst components of the disclosure comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present disclosure are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold TiCl₄ (about 0°C); the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44009.

The solid catalyst components obtained according to the above method show a surface area (by B.E.T. method) may range between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å may range from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of available chemical reactions.

Regardless of the preparation method used, the final amount of the electron donor compound of formula (I) is such that its molar ratio with respect to the Ti atoms is from 0.01 to 2, preferably from 0.05 to 1.5.

The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

The external electron-donor compounds can include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

As explained, the catalyst components of the present disclosure, particularly when used in the polymerization of propylene in association with an aluminum alkyl compound and an alkyl alkoxysilane are able to produce polypropylene, under the polymerization conditions set forth in the experimental section, with an activity higher than 40 Kg/gcat preferably higher than 50 Kg/gcat and a xylene insolubility at 25°C higher than 96%, preferably higher than 97 and more preferably higher than 98%.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the disclosure;
(ii) an alkylaluminum compound and,
(iii) optionally an electron-donor compound (external donor).

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure ranges between 1 and 8 MPa, preferably between 1.5 and 5 MPa.

The following examples are given in order to further illustrate the disclosure.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

### General procedure for preparation of the spherical adducts

### Procedure for preparation of the spherical adducts A and B

An initial amount of microspheroidal MgCl₂.2.8C₂H₅OH was prepared according to the method described in Example 2 of WO98/44009, but operating on larger scale. This adduct is called adduct A. The solid adduct A was then subject to thermal dealcoholation at increasing temperatures from 30 to 130°C and operating in nitrogen current until reaching an alcohol content of 1.9 moles per mol of MgCl₂. This partially dealcoholated adduct is called adduct B.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, the external electron donor indicated in Table 1 (if used) and 0.006÷0.010 g of solid catalyst component. The autoclave was closed; subsequently 2.0 NL of hydrogen (1,5NL if C donor is used as ED) were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Donor synthesis

The internal donors used in the examples 1-12 have been prepared using the following synthetic route:

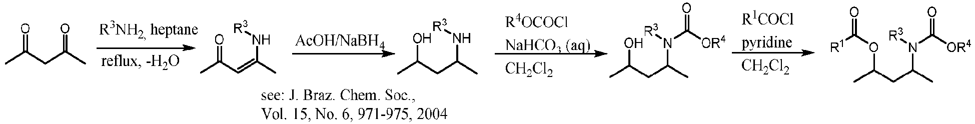

The internal donor used in the comparative example 1 has been prepared according to US2015/0259448.

### EXAMPLES 1-12 and Comp. Ex.1

### Preparation of Solid Catalyst Component and polymerization

Into a 500 cm³ round bottom flask, equipped with mechanical stirrer, cooler and thermometer 250 cm³ of TiCl₄ were introduced at room temperature under nitrogen atmosphere. After cooling to 0°C, while stirring, the internal donor of synthetic example 1 and 10.0 g of the spherical adduct A were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off. The solid was washed with anhydrous hexane six times (6 x 100 cm³) in temperature gradient down to 60°C and one time (100 cm³) at room temperature. The obtained solid was then dried under vacuum. The so obtained solid catalyst components were tested in polymerization of propylene, using the procedure described above. The results are listed in Table 1.

### EXAMPLE 13

### Preparation of Solid Catalyst Component and polymerization

Into a 500 cm³ round bottom flask, equipped with mechanical stirrer, cooler and thermometer 250 cm³ of TiCl₄ were introduced at room temperature under nitrogen atmosphere. After cooling to 0°C, while stirring, 10.0 g of the spherical adduct B were sequentially added into the flask. The temperature was raised to 120°C and maintained for 1 hour. The internal donor is charged when the internal temperature reaches 40°C. The amount of charged internal donor was such to charge a Mg/donor molar ratio of 8.. After 1 hour at 120°C stirring was stopped, the solid product was allowed to settle and the supernatant liquid was siphoned off at 120°C. After the supernatant was removed, additional fresh TiCl₄ was added to reach the initial liquid volume again. The mixture was then heated at 120°C and kept at this temperature for 30 minutes. Stirring was stopped again, the solid was allowed to settle and the supernatant liquid was siphoned off. After the supernatant was removed, additional fresh TiCl₄ was added to reach the initial liquid volume again. The mixture was then heated at 120°C and kept at this temperature for 15 minutes. Stirring was stopped again, the solid was allowed to settle and the supernatant liquid was siphoned off. The obtained solid was washed four times with anhydrous heptane (4 x 100 cm³) at 90°C and two times with anhydrous iso-hexane (2 x 100 cm³) at 25°C then dried under vacuum. The so obtained solid catalyst components were tested in polymerization of propylene, using the procedure described above. The results are listed in Table 1.

**TABLE 1**

| **Ex.** | **Catalyst compostion** | | | **Polymerization** | | | |
|---|---|---|---|---|---|---|---|
| | **Internal Donor** | | **Ti** | **ED** | **Activity** | **XI** | **MIL** |
| | **Structure / Name** | **%wt** | **%wt** | | **kg/g** | **%wt** | **g/10'** |
| 1 | 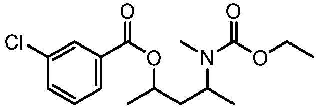 | 19.8 | 5.3 | D | 52 | 96.6 | 1.3 |
| | 4-((ethoxycarbonyl)(methyl)amino)pentan-2-yl 3-chlorobenzoate, syn/anti 9:1 | | | | | | |
| 2 | 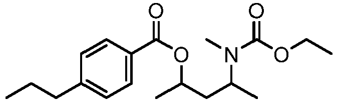 | 18.6 | 4.5 | D | 104 | 98.5 | 0.7 |
| | 4-((ethoxycarbonyl)(methyl)amino)pentan-2-yl 4-propylbenzoate, syn/anti 8:2 | | | | | | |
| 3 | 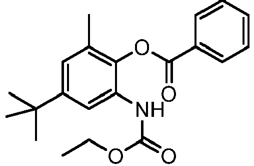 | n.d. | 4.8 | D | 44 | 96.5 | 5.6 |
| | 4-(tert-butyl)-2-((ethoxycarbonyl)amino)-6-methylphenyl benzoate | | | | | | |
| 4 | 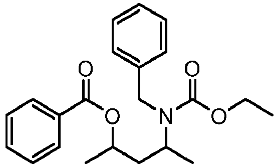 | 19.1 | 4.3 | D | 44 | 97.3 | 1.4 |
| | 4-(benzyl(ethoxycarbonyl)amino)pentan-2-yl benzoate | | | | | | |
| 5 | 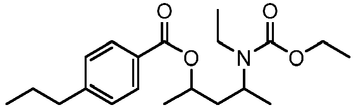 | 16.3 | 4.4 | D | 97 | 98.8 | 0.4 |
| | 4-((ethoxycarbonyl)(ethyl)amino)pentan-2-yl 4-propylbenzoate | | | | | | |
| 6 | 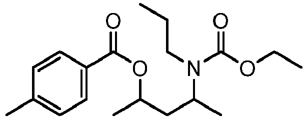 | 18.9 | n.d. | D | 81 | 98.8 | 0.6 |
| | 4-((ethoxycarbonyl)(propyl)amino)pentan-2-yl 4-methylbenzoate, syn/anti 9:1 | | | | | | |
| 7 | 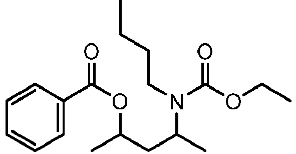 | 15.5 | 4.5 | D | 73 | 98.7 | 0.5 |
| | 4-(butyl(ethoxycarbonyl)amino)pentan-2-yl benzoate, syn/anti 8:2 | | | | | | |
| 8 | 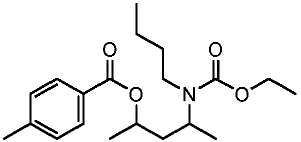 | 21.2 | 4.7 | C | 70 | 98.0 | 0.6 |
| | 4-(butyl(ethoxycarbonyl)amino)pentan-2-yl 4-methylbenzoate, syn/anti 8:2 | | | | | | |
| 9 | 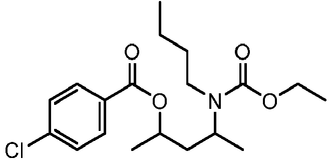 | n.d. | 4.7 | C | 44 | 97.3 | 0.5 |
| | 4-(butyl(ethoxycarbonyl)amino)pentan-2-yl 4-chlorobenzoate, syn/anti 8:2 | | | | | | |
| 10 | 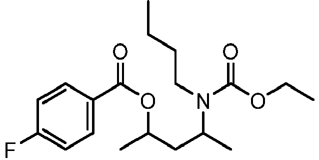 | 19.9 | 5.4 | D | 62 | 97.9 | 0.5 |
| | 4-(butyl(ethoxycarbonyl)amino)pentan-2-yl 4-fluorobenzoate, syn/anti 85:15 | | | | | | |
| 11 | 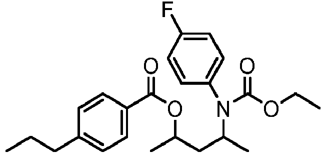 | 23.5 | 4.7 | D | 56 | 98.4 | 0.3 |
| | 4-((ethoxycarbonyl)(4-fluorophenyl)amino)pentan-2-yl 4-propylbenzoate, syn/anti 8:2 | | | | | | |
| 12 | 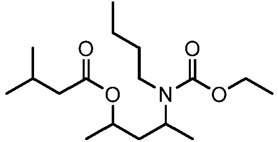 | 14.4 | 4.9 | D | 48 | 97.8 | 1.1 |
| | 4-(butyl(ethoxycarbonyl)amino)pentan-2-yl 3-methylbutanoate, syn/anti 75:25 | | | | | | |
| Comp. Ex 1 | 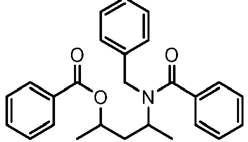 | 13.8 | 4.4 | D | 34 | 96.2 | 2.2 |
| | 4-(N-benzylbenzamido)pentan-2-yl benzoate | | | | | | |
| 13 | 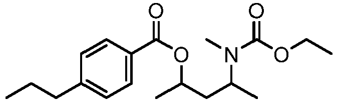 | n.d. | 3.4 | C | 80 | 98.8 | 0.3 |
| | | | | No ED | 90 | 95.5 | 1.7 |
| | 4-((ethoxycarbonyl)(methyl)amino)pentan-2-yl 4-propylbenzoate, syn/anti 8:2 | | | | | | |

| | | | | | | | |
|---|---|---|---|---|---|---|---|
| ED: External Donor. D: dicyclopentyldimethoxysilane C: methylcyclohexyldimethoxysilane nd: not determined | | | | | | | |

## Claims

1. A solid catalyst component for the polymerization of olefins comprising Mg, Ti and an electron donor of formula (I) 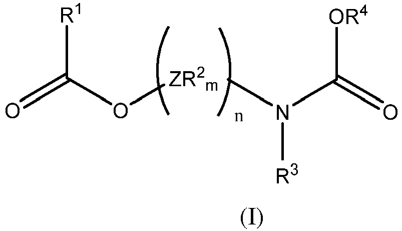 where independently, Z is selected from C, Si, Ge, O, N, S or P with the proviso that the atoms O, S, and N are not directly linked to either the ester oxygen or the carbamic nitrogen of the formula (I), the R² groups, equal to or different from each other, are hydrogen or a C₁-C₂₀ hydrocarbon radicals, optionally containing a heteroatom selected from halogen, P, S, N, O and Si, which can be fused together to form one or more cycles, m is a number satisfying the valences of Z and n is an integer ranging from 1 to 10, R¹ and R⁴ are selected from C₁-C₁₅ hydrocarbon groups, optionally containing a heteroatom selected from halogen, P, S, N, O; and R³ group, is hydrogen or R⁴ groups.

2. The catalyst component according to claim 1 in which the (ZR²ₘ)ₙ group of formula (I) is selected from the group consisting of aliphatic, alicyclic and aromatic bivalent radicals, optionally substituted with C₁-C₁₅ hydrocarbon groups and/or with heteroatoms selected from halogen, P, S, N, O and Si, in which n ranges from 1 to 6 atoms.

3. The catalyst component according to claim 2 in which the (ZR²ₘ)ₙ group is an aliphatic or alicyclic bridging group in which n ranges from 1-6 carbon atoms.

4. The catalyst component according to claim 1 in which R¹ groups are selected from aryl and alkylaryl groups.

5. The catalyst component according to claim 4 in which R¹ groups are selected from phenyl groups.

6. The catalyst component according to claim 5 in which the phenyl groups are substituted with halogen and/or C₁-C₅ alkyl groups.

7. The catalyst component according to claim 1 in which R³ groups are independently selected from hydrogen or C₁-C₁₀ alkyl groups.

8. The catalyst component according to claim 7 in which R³ groups are independently selected from C₁-C₅ alkyl groups.

9. The catalyst component according to claim 1 in which the R⁴ groups are selected from C₁-C₁₀ alkyl groups.

10. The catalyst component according to claim 9 in which the R⁴ groups are selected from C₁-C₅ alkyl groups.

11. The catalyst component according to claim 1 in which the electron donor is selected from those of formula (III) 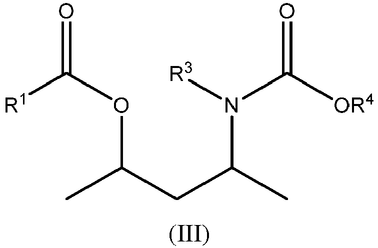 in which in which R¹ groups are phenyl groups optionally substituted with halogen and/or C₁-C₅ alkyl groups, R³ is hydrogen or C₁-C₂₀ hydrocarbon group, and R⁴ is a C₁-C₁₀ alkyl group.

12. The catalyst component according to claim 11 in which R³ is hydrogen or methyl and R⁴ is a C₁-C₅ alkyl group.

13. Catalyst for the polymerization of olefins comprising the product of the reaction between:
(i) the solid catalyst component according to any of the preceding claims and
(ii) an alkylaluminum compound and optionally,
(iii) an external electron donor compound.

14. The catalyst according to claim 13 further comprising an external electron donor compound.

15. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the proceeding claims;
ii. an alkylaluminum compound and,
iii. optionally an external donor compound.

## Patentansprüche

1. Feste Katalysatorkomponente für die Polymerisation von Olefinen, umfassend Mg, Ti und einen Elektronendonor mit der Formel (I) 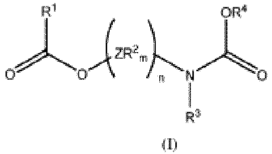 wobei Z unabhängig ausgewählt ist aus C, Si, Ge, O, N, S oder P mit der Maßgabe, dass die Atome O, S und N nicht direkt mit dem Estersauerstoff oder dem Carbaminstickstoff der Formel (I) verknüpft sind, die Gruppen R², die gleich oder voneinander verschieden sind, Wasserstoff oder ein C₁- bis C₂₀-Kohlenwasserstoffrest sind, der gegebenenfalls ein Heteroatom ausgewählt aus Halogen, P, S, N, O und Si enthält, die unter Bildung von einem oder mehreren Cyclen miteinander kondensiert sein können, m eine Zahl ist, die die Wertigkeiten von Z absättigt, und n eine ganze Zahl im Bereich von 1 bis 10 ist, R¹ und R⁴ ausgewählt sind aus C₁- bis C₁₅-Kohlenwasserstoffgruppen, die gegebenenfalls ein Heteroatom ausgewählt aus Halogen, P, S, N, O enthalten; und die Gruppe R³ Wasserstoff oder Gruppen R⁴ ist.

2. Katalysatorkomponente nach Anspruch 1, wobei die Gruppe -(ZR²ₘ)ₙ- der Formel (I) ausgewählt ist aus der Gruppe bestehend aus aliphatischen, alicyclischen und aromatischen zweiwertigen Resten, die gegebenenfalls mit C₁- bis C₁₅-Kohlenwasserstoffgruppen und/oder mit Heteroatomen ausgewählt aus Halogen, P, S, N, O und Si substituiert sind, wobei n im Bereich von 1 bis 6 Atomen liegt.

3. Katalysatorkomponente nach Anspruch 2, wobei die Gruppe (ZR²ₘ)ₙ eine aliphatische oder alicyclische Brückengruppe ist, in der n im Bereich von 1 bis 6 Kohlenstoffatomen liegt.

4. Katalysatorkomponente nach Anspruch 1, wobei die Gruppen R¹ ausgewählt sind aus Aryl- und Alkylarylgruppen.

5. Katalysatorkomponente nach Anspruch 4, wobei die Gruppen R¹ ausgewählt sind aus Phenylgruppen.

6. Katalysatorkomponente nach Anspruch 5, wobei die Phenylgruppen mit Halogen und/oder C₁- bis C₅-Alkylgruppen substituiert sind.

7. Katalysatorkomponente nach Anspruch 1, wobei die Gruppen R³ unabhängig ausgewählt sind aus Wasserstoff oder C₁- bis C₁₀-Alkylgruppen.

8. Katalysatorkomponente nach Anspruch 7, wobei die Gruppen R³ unabhängig ausgewählt sind aus C₁- bis C₅-Alkylgruppen.

9. Katalysatorkomponente nach Anspruch 1, wobei die Gruppen R⁴ ausgewählt sind aus C₁- bis C₁₀-Alkylgruppen.

10. Katalysatorkomponente nach Anspruch 9, wobei die Gruppen R⁴ ausgewählt sind aus C₁- bis C₅-Alkylgruppen.

11. Katalysatorkomponente nach Anspruch 1, wobei der Elektronendonor ausgewählt ist aus jenen der Formel (III) 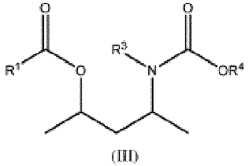 wobei die Gruppen R¹ Phenylgruppen sind, die gegebenenfalls mit Halogen und/oder C₁- bis C₅-Alkylgruppen substituiert sind, R³ Wasserstoff oder C₁- bis C₂₀-Kohlenwasserstoffgruppe ist, und R⁴ eine C₁- bis C₁₀-Alkylgruppe ist.

12. Katalysatorkomponente nach Anspruch 11, wobei R³ Wasserstoff oder Methyl ist und R⁴ eine C₁- bis C₅-Alkylgruppe ist.

13. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung und gegebenenfalls
(iii) einer externen Elektronendonorverbindung.

14. Katalysator nach Anspruch 13, ferner umfassend eine externe Elektronendonorverbindung.

15. Verfahren zur (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems durchgeführt wird, welches das Produkt der Reaktion zwischen
i. der festen Katalysatorkomponente gemäß einem der vorhergehenden Ansprüche;
ii. einer Alkylaluminiumverbindung und
iii. gegebenenfalls einer externen Donorverbindung umfasst.

## Revendications

1. Constituant catalytique solide pour la polymérisation d'oléfines comprenant Mg, Ti et un donneur d'électrons de formule (I) 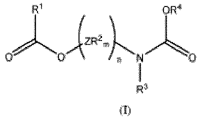 dans laquelle, indépendamment, Z est choisi parmi C, Si, Ge, O, N, S ou P à condition que les atomes O, S, et N ne soient pas directement liés soit à l'oxygène de fonction ester, soit à l'azote carbamique de formule (I) ; les groupes R², identiques ou différents les uns des autres, représentent hydrogène ou un radical hydrocarboné en C₁-C₂₀, contenant éventuellement un hétéroatome choisi parmi halogène, P, S, N, O et Si, qui peuvent être fusionnés ensemble pour former un ou plusieurs cycles ; m est un nombre satisfaisant aux valences de Z et n est un nombre entier allant de 1 à 10 ; R¹ et R⁴ sont choisis parmi les groupes hydrocarbonés en C₁-C₁₅, contenant éventuellement un hétéroatome choisi parmi halogène, P, S, N, O ; et le groupe R³ représente hydrogène ou des groupes R⁴.

2. Constituant catalytique selon la revendication 1, dans lequel le groupe (ZR²ₘ)ₙ de formule (I) est choisi dans le groupe constitué par les radicaux bivalents aliphatiques, alicycliques et aromatiques, éventuellement substitués par des groupes hydrocarbonés en C₁-C₁₅ et/ou par des hétéroatomes choisis parmi halogène, P, S, N, O et Si, n étant situé dans une plage de 1 à 6 atomes.

3. Constituant catalytique selon la revendication 2, dans lequel le groupe (ZR²ₘ)ₙ est un groupe de pontage aliphatique ou alicyclique dans lequel n est situé dans une plage de 1 à 6 atomes de carbone.

4. Constituant catalytique selon la revendication 1, dans lequel les groupes R¹ sont choisis parmi les groupes aryle et alkylaryle.

5. Constituant catalytique selon la revendication 4, dans lequel les groupes R¹ sont choisis parmi les groupes phényle.

6. Constituant catalytique selon la revendication 5, dans lequel les groupes phényle sont substitués par halogène et/ou des groupes alkyle en C₁-C₅.

7. Constituant catalytique selon la revendication 1, dans lequel les groupes R³ sont choisis, indépendamment, parmi hydrogène ou les groupes alkyle en C₁-C₁₀.

8. Constituant catalytique selon la revendication 7, dans lequel les groupes R³ sont choisis, indépendamment, parmi les groupes alkyle en C₁-C₅.

9. Constituant catalytique selon la revendication 1, dans lequel les groupes R⁴ sont choisis parmi les groupes alkyle en C₁-C₁₀.

10. Constituant catalytique selon la revendication 9, dans lequel les groupes R⁴ sont choisis parmi les groupes alkyle en C₁-C₅.

11. Constituant catalytique selon la revendication 1, dans lequel le donneur d'électrons est choisi parmi ceux de formule (III) 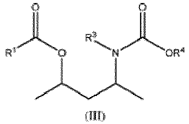 dans laquelle le groupe R¹ représente des groupes phényle éventuellement substitués par halogène et/ou des groupes alkyle en C₁-C₅ ; R³ représente un hydrogène ou un groupe hydrocarboné en C₁-C₂₀ ; et R⁴ représente un groupe alkyle en C₁-C₁₀.

12. Constituant catalytique selon la revendication 11, dans lequel R³ représente hydrogène ou méthyle et R⁴ représente un groupe alkyle en C₁-C₅.

13. Catalyseur pour la polymérisation d'oléfines comprenant le produit de la réaction entre :
(i) le constituant catalytique solide selon l'une quelconque des revendications précédentes et
(ii) un composé d'alkylaluminium et, éventuellement,
(iii) un composé donneur d'électrons externe.

14. Catalyseur selon la revendication 13 comprenant, en outre, un composé donneur d'électrons externe.

15. Procédé pour la (co)polymérisation d'oléfines CH₂=CHR, dans lesquelles R représente hydrogène ou un radical hydrocarbyle comprenant 1 à 12 atomes de carbone, effectué en présence d'un système catalytique comprenant le produit de la réaction entre :
i. le constituant catalytique solide selon l'une quelconque des revendications ci-dessus ;
ii. un composé d'alkylaluminium et,
iii. éventuellement, un composé donneur externe.
